# EUROPEAN PATENT SPECIFICATION

(11) **EP 3 380 560 B1**
(45) Date of publication and mention of the grant of the patent: **14.08.2019**
(21) Application number: 16801257.3
(22) Date of filing: 25.11.2016
(51) Int. Cl.: C08L 25/12, C08L 51/04, C08L 69/00

(54) **POLYCARBONATE-ASA BLENDS WITH ANTISTATIC PROPERTIES USING SULFONATED ALKANES**
POLYCARBONAT-ASA-MISCHUNGEN MIT ANTISTATISCHEN EIGENSCHAFTEN UNTER VERWENDUNG VON SULFONIERTEN ALKANEN
MÉLANGES POLYCARBONATE-ASA AUX PROPRIÉTÉS ANTISTATIQUES UTILISANT DES ALCANES SULFONÉS

(30) Priority: 26.11.2015 EP 15196453
(43) Date of publication of application: 03.10.2018
(73) Proprietor: INEOS Styrolution Group GmbH, 60325 Frankfurt (DE)
(72) Inventor: KRABBENBORG, Frank, 4533 AG Terneuzen (NL); GROSS, Christian, 41542 Dormagen (DE)
(74) Representative: Jacobi, Markus Alexander
(86) International application number: PCT/EP2016/078824
(87) International publication number: WO 2017/089547

(56) References cited:
- CN-A- 104 845 320
- DE-A1- 4 034 336
- US-A1- 2014 275 368

## Description

The present invention relates to thermoplastic molding compositions comprising at least one aromatic polycarbonate (component A), at least one styrene graft polymer, such as acrylonitrile-styrene-acrylic ester copolymer (ASA), (as component B), at least one thermoplastic styrene copolymer (component C), at least one sulfonated secondary alkane, having from 6 to 40 carbon atoms, as antistatic agent (component D) and also, where appropriate, one or more optional components, such as filler(s) E and/or further additive(s) F. The invention is further directed to the use of sulfonated secondary alkanes having from 6 to 40 carbon atoms as antistatic agent D in such thermoplastic molding compositions, in particular in polymer blends made of polycarbonate (PC) and acrylonitrile/styrene/acrylic ester polymer (ASA).

Thermoplastic molding compositions based on styrene copolymers of various kinds are well known and are widely used because their performance characteristics, such as impact resistance, good weathering resistance, high resistant to chemicals and solvents and advantageous surface properties, are favorable for many applications. Polymer blends made of polycarbonate (PC) and styrene copolymers, such as ABS (acrylonitrile-butadiene-styrene polymers) or ASA (acrylonitrile/styrene/acrylic ester polymers) have excellent mechanical properties and weathering resistance. A person skilled in the art will find details on molding compositions in L. Bottenbruch, Kunstoff-Handbuch (Volume 3/2 "Engineering Polyblends" [in German], Hanser Verlag, Munich 1993). These molding compositions are used in a wide variety of sectors, such as automotive construction, in the construction of buildings, for office machinery, and also in electrical devices and in household appliance.

Plastic surfaces are particular susceptible to buildup of static electrical charge due to the high electric insulation properties. This static electricity may cause some troubles in several applications, such as dust attraction, electric shock, sticking of films. For some applications this antistatic accumulation of electric charge should be avoided or eliminated, e.g. for food and cosmetic packaging materials and for plastic material relating to sensitive electronic products or to reduce a major fire hazard.

The surface resistivity of plastic materials, such as ABS and ASA copolymers, is typically between 10¹⁴ to 10¹⁵ ohm, without any antistatic agents. As a rule, with the addition of common antistatic agents, it may be possible to reduce the surface resistivity to 10⁹ to 10¹² ohm. A higher conductivity can be obtained by addition of conductive fillers, such as carbon black, carbon fillers or powdered metal.

Generally, internal antistatic agents which are incorporated into the polymer mass, or external antistatic agents, which are applied onto the surface of a molded article (e.g. by spraying an aqueous solution of the antistatic agent) can be used to obtain antistatic properties of a polymer composition. The common internal antistatic agents, such as ethoxylated alkylamines, fatty acid esters or alkylsulfonates (e.g. Hostastat® additives of Clariant (Germany) or Armostat® additives of AKZO) normally exhibit interfacial active character and accumulates on the surface of the molding. As a rule this results in an bonding of water onto the surface of the molding and the formation of a micro layer of humidity. This layer normally enables electric charges to dissipate and the surface resistivity is reduced.

The document CN-A 101899204 relates to an antistatic PC/ASA alloy material and a preparation method thereof. The antistatic PC/ASA alloy material comprises the following components: 50 to 80 % by weight of polycarbonate, 5 to 20 % by weight of ASA resin, 0 to 15 % by weight of SAN resin, 1 to 5 % by weight of flexibilizer, 7 to 20 % by weight of antistatic agent, 1 to 5 % by weight of tetrapod-like zinc oxide whisker, 0.1 to 1 % by weight of oxidation inhibitor and 0.1 to 2 % by weight of lubricating agent. The antistatic agent is an macromolecular agent for example a polyetheramide, polyether ester amide or polyether ester. Preferably, the antistatic agent is present in the alloy material in an amount from 10 to 13 % by weight.

CN-A 101759982 describes an antistatic and ultraviolet resistant PC/ASA composition consisting of the following components: 30 to 85 part by weight of polycarbonate, 5 to 30 parts by weight of acrylonitrile-styrene-acrylic ester graft copolymer, 0 to 30 parts by weight of acrylonitrile-styrene copolymer, 5 to 15 parts by weight of macromolecular antistatic agent, 2 to 10 parts by weight of compatibilizer, 0.2 to 2 parts by weight of light stabilizer and 0.2 to 1 part by weight of antioxidant. Preferably, the macromolecular antistatic agent is a polyether ester amide-type polymeric antistatic agent or a polyether amide-type polymeric antistatic agent. The composition can for example be used for the production of interior plastic parts of an automobile.

Several commercial antistatic agents based on polymeric systems are used for the application in styrene copolymers, e.g. Irgastat®P (BASF SE).

Disadvantages of the polymeric antistatic agents, commonly used for ABS and ASA thermoplastic compositions, such as polyamide/polyether block amides, are high costs and sometimes problems concerning incompatibility or loss in mechanical properties, in particular due to required high levels of often more than 10 % by weight.

It is an object of the present invention to provide molding compositions on the basis of polycarbonate and acrylonitrile/styrene/acrylate-copolymers (ASA) having improved antistatic properties at moderate cost. In particular because of economic reasons the desired antistatic properties should be reached with a low amount of antistatic agent (for example less than 4 % by weight), wherein preferably the antistatic agent is less expensive.

Thus, an object of the invention was to provide a cost effective and reliable method for the antistatic modification of PC/ASA blends. Further, a particular object was to provide polycarbonate/styrene copolymer blends which have sufficient to good mechanical properties, such as high stiffness and good toughness. Also the inventive molding compositions should exhibit less or none odor emission. All of the above mentioned improvements should be achieved simultaneously, i.e. one feature should not be obtained at the expense of another.

It was surprisingly found that the addition of secondary alkane sulfonates, having from 6 to 40 carbon atoms yields in a good antistatic modification of PC/ASA blends in relatively low concentration of about 2 to 4 % by weight and therefore at low costs, in comparison to known permanent antistatic agents, e.g. antistatic agents based on polyether-polyamide block copolymers.

The present invention provides novel and improved thermoplastic molding compositions comprising (or even consisting of) the following components:
a) 1 to 97.5 % by weight, preferably from 10 to 94 % by weight, in particular from 20 to 92 %, by weight, based on the thermoplastic molding composition, of at least one aromatic polycarbonate A (also referred to as component A);
b) 1 to 97.5 % by weight, preferably from 1.5 to 50 % by weight, in particular from 2 to 45 % by weight, based on the thermoplastic molding composition, of one or more graft polymer B (also referred to as component B) made from
   b1) 40 to 80 % by weight, based on the graft polymer B, of an graft base made from an elastomeric polymer B1 based on alkyl acrylates having from 1 to 8 carbon atoms in the alkyl radical, and having a glass transition temperature below 0° C,
   b2) 20 to 60 % by weight, based on the graft polymer B, of a graft B2 made from
      b21) 60 to 95 % by weight, based on the graft B2, of styrene or of substituted styrenes B21 of the formula (I), 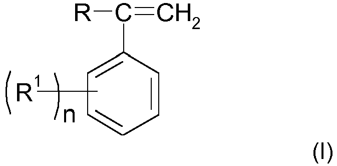
         wherein: R is C₁-C₈-alkyl or hydrogen;
         R¹ is C₁-C₈-alkyl or hydrogen, with the provision that not both of R and R¹ are hydrogen, and n is 1, 2 or 3,
         or a mixture of these compounds, and
      b22) 5 to 40 % by weight, based on the graft B2, of at least one unsaturated nitrile B22;
c) 1 to 97.5 % by weight, preferably from 3.5 to 50 % by weight, in particular from 4 to 40 % by weight, based on the thermoplastic molding composition, of at least one thermoplastic copolymer C (also referred to as component C) made from
   c1) 60 to 85 % by weight, based on the thermoplastic copolymer C, of styrene or of substituted styrenes C1 of the formula I, or a mixture of these compounds, and
   c2) 15 to 40 % by weight, based on the thermoplastic copolymer C, of at least one unsaturated nitrile C2;
d) 0.5 to 10 % by weight, preferably from 1 to 7 % by weight, more preferably from 2 to 5 % by weight, based on the thermoplastic molding composition, of at least one antistatic agent D selected from sulfonated secondary alkanes, having from 6 to 40, preferably from 10 to 35, more preferably from 12 to 35, particular preferably from 18 to 32 carbon atoms (also referred to as component D);
e) 0 to 50 % by weight, based on the thermoplastic molding composition, of at least one filler E (also referred to as component E);
f) 0 to 40 % by weight, based on the thermoplastic molding composition, of at least one further additive F (also referred to as component F).

In a preferred embodiment the entirety of the components A to F gives 100 % by weight. If the optional components E and/or F are present, the amount of the polycarbonate A, of the graft polymer B or of the styrene copolymer C can be adapted in a usual manner, so that the entirety of the components A to F gives 100 % by weight, preferably the amount of the polycarbonate A may be adapted.

A preferred molding composition comprises:
20 to 92% by weight of A,
2 to 45% by weight of B,
4 to 40% by weight of C,
2 to 5% by weight of D,
and at least 0,1% by weight of E and/or F.

The invention further relates to a process for preparing the molding compositions, to the use of the molding compositions for producing moldings, fibers, or films, and to these moldings, fibers, and films. Finally, the invention relates to the use of the above-mentioned sulfonated secondary alkanes (also referred to as alkane sulfonates), component D, as antistatic agent in molding compositions in which polycarbonates, graft polymers and styrene copolymers are present, e.g. PC/ASA thermoplastic compositions.

Preferred embodiments are given in the claims.

We have found that the object described above is achieved by means of the thermoplastic molding compositions defined at the outset, by a process for their preparation, and by their use for producing moldings, fibers, or films, and also by means of these moldings, fibers, and films. The advantage of the present invention is that specific sulfonated secondary alkane, having from 6 to 40 carbon atoms, described in the following can effect a good antistatic effect combined with sufficient mechanical properties in PC/ASA molding compositions in relative low levels of about 2 to 4 % by weight. In line with this, the desired antistatic modification of the moldings can advantageously be effected at lower cost compared to known permanent antistatic agents based on polyether-polyamide block copolymers, e.g. the commercial products CESA®-stat (Clariant) and Irgastat® P (BASF SE).

The molding compositions of the invention differ from the molding compositions of the prior art in the selection and amount of the antistatic agent, here component D.

They differ from CN-A 101899204 and CN-A 101759982 in that the antistatic agent is a sulfonated secondary alkane having from 6 to 40 carbon atoms in an relative small amount from 0.5 to 10 % by weight, preferably from 1 to 7 by weight, more preferably from 2 to 5 % by weight, based on the thermoplastic molding composition instead of an more expensive macromolecular antistatic agent.

The preferred components A to F are explained below in more detail.

### Component A

The amount of component A present in the molding compositions of the invention is from 1 to 97.5 % by weight, preferably from 10 to 94 % by weight, in particular from 20 to 92 % by weight.

Halogen-free polycarbonates are preferably used as component A. Examples of suitable halogen-free polycarbonates are those based on biphenols of the formula II.

In a preferred embodiment the at least one aromatic polycarbonate A is based on biphenols of the formula II 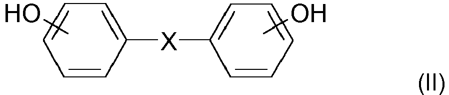 where X is a single bond, C₁-C₃-alkylene, C₂-C₃-alkylidene, C₃-C₆-cycloalkylidene, or else -S- or -SO₂-.

Examples of preferred biphenols of the formula II are hydroquinone, resorcinol, 4,4'-dihydroxyphenol, 2,2-bis-(4-hydroxyphenyl)propane, 2,4-bis(4-hydroxyphenyl)-2-methylbutane and 1,1-bis(4-hydroxyphenyl)cyclohexane. Particular preference is given to 2,2-bis(4-hydroxyphenyl)propane and 1,1-bis(4-hydroxyphenyl)cyclohexane, and also to 1,1-bis(4-hydroxyphenyl)-3,3,5-trimethylcyclohexane.

Either homopolycarbonates or copolycarbonates are suitable as component A, and preference is given to the copolycarbonates of bisphenol A, as well as to bisphenol A homopolycarbonate.

Suitable polycarbonates may have branching in a known manner, preferably via incorporation of from 0.05 to 2.0 mol %, based on the entirety of the biphenols used, of at least trifunctional compounds, for example those having three or more than three phenolic OH groups.

Polycarbonates which have proven particularly suitable are those whose relative viscosities ηᵣₑₗ are from 1.10 to 1.50, in particular from 1.20 to 1.40. This corresponds to average molecular weights M_{w} (weight-average) of from 10,000 to 200,000 g/mol, preferably from 20,000 to 80,000 g/mol, or viscosity numbers of from 20 to 100 ml/g, in particular from 40 to 80 ml/g, measured to DIN 53727 on a 0.5 % strength by weight solution in methylene chloride at 23° C.

The biphenols of the general formula II are known per se or can be prepared by known methods.

One method of preparing the polycarbonates is to react the biphenols with phosgene by the interfacial process, or with phosgene by the homogeneous-phase process (known as the pyridine process), and an appropriate amount of known chain terminators can be used in a known manner in each case to achieve the desired viscosity number and therefore the molecular weight.

Polydiorganosiloxane-containing polycarbonates are for example described in DE-A 33 34 782.

Examples of suitable chain terminators are phenol, p-tert-butylphenol, and also long-chain alkylphenols, such as 4-(1,3-tetramethylbutylbutyl)phenol, as in DE-A 28 42 005, or monoalkylphenols or dialkylphenols having a total of from 8 to 20 carbon atoms in the alkyl substituents, as in DE-A 35 06 472, for example p-nonylphenol, 3,5-di-tert-butylphenol, p-tert-octylphenol, p-dodecylphenol, 2-(3,5-dimethylheptyl)phenol and 4-(3,5-dimethylheptyl)phenol.

For the purposes of the present invention, a halogen-free polycarbonate is a polycarbonate built up from halogen-free biphenols, from halogen-free chain terminators and, where appropriate, from halogen-free branching agents. Any minor ppm content here of hydrolyzable chlorine, resulting, for example, from the preparation of the polycarbonates with phosgene in the interfacial process, is not to be regarded as meriting the term halogen-containing for the purposes of the present invention. Polycarbonates of this type with ppm contents of hydrolyzable chlorine are halogen-free polycarbonates for the purposes of the present invention.

### Component B

The amount of component B is present in the molding compositions of the invention from 1 to 97.5 % by weight, preferably from 1.5 to 50 % by weight, in particular from 2 to 45 % by weight. Component B is preferably halogen-free.

The graft polymer B has been built up from
b1) 40 to 80 % by weight, preferably 50 to 70% by weight, based on the graft polymer B, of a graft base made from an elastomeric polymer B1 based on alkyl acrylates having from 1 to 8 carbon atoms in the alkyl radical, and having a glass transition temperature below 0° C;
b2) 20 to 60 % by weight, preferably 30 to 50 % by weight, based on the graft polymer B, of a graft B2 made from
   b21) 60 to 95 % by weight, preferably 70 to 85 % by weight, based on the graft B2, of styrene or of substituted styrene B21 of the formula I 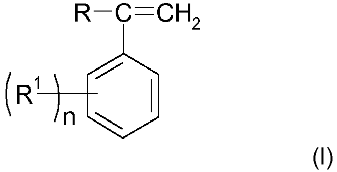
      where R is C₁-C₈-alkyl, preferably methyl or ethyl, or hydrogen, and
      R¹ is C₁-C₈-alkyl, preferably methyl or ethyl, or hydrogen, with the provision that not both of R and R¹ are hydrogen, and and n is 1, 2 or 3,
      or a mixture of these,
   b22) 5 to 40 % by weight, preferably from 15 to 30 % by weight, based on the graft B2, of at least one unsaturated nitrile B22, preferably acrylonitrile or methacrylonitrile or a mixture of these, and
   b23) 0 to 10 % by weight, based on the graft B2, of at least one other monomer B23 capable of free-radical polymerization.

Polymers which may be used for the graft base B1 are those whose glass transition temperature is below 0° C, preferably below -10° C., particularly preferably below -20° C. Examples of these are elastomers based on C₁-C₈-alkyl esters of acrylic acid. The resultant graft rubbers are then respectively ASA rubbers.

The glass transition temperature is usually determined using DSC measurements according to ISO 11357-1 / -2 for example using a heating rate of 10 °C/min.

It is also possible, to use mixtures of the C₁₋₈-alkyl acrylate monomers and other comonomers, e.g. based on ethylene-propylene, based on dienes, such as butadiene, or based on siloxanes, for preparing the graft base B1.

Examples of suitable C₁₋₈-alkyl acrylates are in particular n-butyl acrylate and 2-ethylhexyl acrylate. Particularly suitable dienes are butadiene and isoprene. Examples of suitable siloxanes are hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane and octaphenylcyclotetrasiloxane, see DE-A 197 53 542.

Suitable siloxane elastomers (mostly termed silicone rubbers) have preferably been crosslinked. Suitable crosslinked silicone rubbers are generally those made from units of the formulae R'₂SiO, R'SiO_{3/2}, R'₃SiO_{1/2} and SiO_{2/4}, where R' is a monovalent radical, and in the case of R'₃SiO_{1/2} is, where appropriate, also OH. The amounts of the individual siloxane units here are usually adjusted so that from 0 to 10 molar units of the formula R'SiO_{3/2}, from 0 to 1.5 molar units of R'₃SiO_{1/2} and from 0 to 3 molar units of SiO_{2/4} are present for every 100 units of the formula R'₂SiO.

R' here is generally C₁-C₁₈-alkyl, preferably C₁-C₁₂-alkyl, particularly preferably C₁-C₆-alkyl, such as methyl, ethyl, n-propyl, isopropyl, n-butyl, isobutyl, sec-butyl, tert-butyl, pentyl or hexyl, in particular methyl or ethyl, or C₆-C₁₀-aryl, such as phenyl or naphthyl, in particular phenyl, or C₁-C₁₀-alkoxy and aryloxy, e.g. methoxy, ethoxy or phenoxy, preferably methoxy, or groups susceptible to free-radical attack, e.g. vinyl, allyl, acrylic, acryloxy, methacrylic, methacryloxyalkyl, halo or mercapto groups, preferably vinyl or mercapto-C₁-C₁₀-alkyl radicals, in particular mercaptopropyl, vinyl and methacryloxypropyl.

In one particular embodiment, use is made of silicone rubbers in which at least 80% of all of the radicals R' are methyl radicals. Preference is moreover given to silicone rubbers in which R' is methyl and ethyl.

In another embodiment, use is made of silicone rubbers which contain amounts in the range from 0.01 to 10 mol %, preferably from 0.2 to 2 mol %, of the abovementioned groups susceptible to free-radical attack, based on all of the radicals R'. These silicone rubbers are described by way of example in EP-A 260 558, EP-A 492 376, DE-A 25 39 572 and EP-A 370 347.

Suitable ethylene/propylene elastomers are prepared from ethylene and propylene (EPM rubber) or from ethylene, propylene and a diene (EPDM rubber), see also EP-A 163 411, EP-A 244 857).

Preferred EP(D)M rubbers, which refers to EPM rubbers and/or EPDM rubbers, used are those whose glass transition temperature is in the range from -60 to -40° C. The rubbers have only a small number of double bonds, i.e. fewer than 20 double bonds per 1000 carbon atoms, in particular from 3 to 10 double bonds per 1000 carbon atoms. Examples of these rubbers are copolymers composed of ethylene and propylene, and also ethylene-propylene terpolymers. The latter are prepared via polymerization of at least 30 % by weight of ethylene, at least 30 % by weight of propylene and from 0.5 to 15% by weight of an unconjugated diolefinic component. The terpolymer used generally comprises diolefins having at least 5 carbon atoms, e.g. 5-ethylidenenorbornene, dicyclopentadiene, 2,2,1-dicyclopentadiene and 1,4-hexadiene.

Other suitable materials are polyalkylenamers, such as polypentenamers, polyoctenemers, polydodecanamers, or a mixture of these substances. Use may also be made of partially hydrogenated polybutadiene rubbers in which at least 70 % of residual double bonds have been hydrogenated.

Among the above mentioned rubbers, use is particularly made of the ethylene-propylene copolymers, and also the ethylene-propylene terpolymers (EPDM rubbers). The Mooney viscosity ML₁₋₄ (100° C.) of EPDM rubbers is generally from 25 to 120. They are commercially available.

Graft polymers based on EP(D)M may be prepared by various methods. It is preferable to prepare a solution of the EP(D)M elastomer (rubber) in the monomer mixture and (where appropriate) inert solvents, and to carry out the graft reaction via free-radical initiators, such as azo compounds or peroxides, at relatively high temperatures. By way of example, mention may be made of the processes of DE-B 23 02 014 and DE-A 25 33 991. It is also possible to operate in suspension - as described in U.S. Pat. No. 4,202,948.

Preferred graft bases B1 of the graft polymer B are composed of (or have been built up from):
b11) 70 to 99.9 % by weight, preferably from 69 to 79 % by weight, based on the graft base B1, of at least one alkyl acrylate B11 having from 1 to 8, preferably from 4 to 8, carbon atoms in the alkyl radical, preferably n-butyl acrylate and/or 2-ethylhexyl acrylate, in particular n-butyl acrylate as sole alkyl acrylate,
b12) 0 to 29.9 % by weight, in particular from 20 to 30 % by weight, based on the graft base B1, of another copolymerizable monoethylenically unsaturated monomer B12, such as butadiene, isoprene, styrene, acrylonitrile, methyl methacrylate or vinyl methyl ether, or a mixture of these, and,
b13) 0.1 to 5 % by weight, preferably from 1 to 4 % by weight, based on the graft base B1, of a copolymerizable, polyfunctional, preferably bi- or trifunctional, crosslinking monomer B13,
wherein the entirety of B11, B12 and B13 gives 100 % by weight.

The preferred monomers B11 used to prepare the graft base B1 are acrylates having from 1 to 8, more preferably from 4 to 8, carbon atoms in the alkyl radical. Preferably n-butyl acrylate and/or 2-ethylhexyl acrylate, in particular n-butyl acrylate are used as monomer B11, more preferably these monomers are used as the sole alkyl acrylate.

Suitable bi- or polyfunctional crosslinking monomers B13 of this type are those which contain two, where appropriate three or more, ethylenic double bonds capable of copolymerization and not 1,3-conjugated. Examples of suitable crosslinking monomers are divinylbenzene, diallyl maleate, diallyl fumarate, diallyl phthalate, triallyl cyanurate and triallyl isocyanurate. The acrylic ester of tricyclodecenyl alcohol has proven to be a particularly useful crosslinking polymer (cf. DE-A 12 60 135).

This type of graft base is known per se and described in the literature, for example in DE-A 31 49 358. A graft base B1 composed of the components B11, where appropriate B12, and B13 is also termed ASA rubber. Its preparation is known per se and is described by way of example in DE-A 28 26 925, DE-A 31 49 358 and DE-A 34 14 118.

Preferred grafts B2 are those in which B21 is styrene or α-methylstyrene or a mixture of these, and B22 is acrylonitrile or methacrylonitrile or mixtures of these. Particularly preferred monomer mixtures are styrene and acrylonitrile or α-methylstyrene and acrylonitrile. The grafts B2 are obtainable by copolymerizing components B21 and B22 and, if appropriate, B23 in the presence of the graft bases B1. The graft B2 (graft shell) of the graft polymers may be built up in one or two stages.

Examples of other suitable monomers B23 capable of free-radical polymerization are acrylates, such as tert-butyl acrylate or glycidyl acrylate, and also the corresponding methacrylates.

The graft polymers B may be prepared by the method described in DE-C 12 60 135, for example.

The conditions selected for the graft polymerization are preferably such that the resultant particle sizes are from 50 to 700 nm (d₅₀ for the cumulative mass distribution). Measures for this purpose are known and described in DE-A 28 26 925, for example. A coarse-particle rubber dispersion may be prepared directly by the seed-latex process.

To obtain very tough products, it is frequently advantageous to use a mixture of at least two graft polymers with different particle sizes. To achieve this, the particles of the rubber are enlarged in a known manner, e.g. by agglomeration, to give the latex a bimodal structure (from 50 to 180 nm and from 200 to 700 nm).

Graft polymers B which comprises a coarse-particle and a fine-particle graft copolymer are described in DE-A 36 15 607, for example. Graft polymers B which have a two-stage graft shell are known from EP-A-0 111 260.

### Component C

The amount of component C present in the thermoplastic molding compositions of the invention is from 1 to 97.5 % by weight, preferably from 3.5 to 50 % by weight, in particular from 4 to 40 % by weight. It is preferably halogen-free. The component C differs in structure from component B.

According to the invention, the copolymer C is composed of (or have been built up from):
c1) 60 to 85 % by weight, preferably from 70 to 83 % by weight, based on the copolymer C, of styrene or of substituted styrenes C1 of the formula I given above, or a mixture of these, and
c2) 15 to 40 % by weight, preferably from 17 to 30 % by weight, based on the copolymer C, of at least one unsaturated nitrile C2, preferably acrylonitrile or methacrylonitrile or a mixture of these,
wherein the entirety of c1) and c2) being 100 % by weight.

Preferably, the copolymer C is composed of (or have been built up from) 70 to 83 % by weight, based on the copolymer C, of styrene and 17 to 30 % by weight, based on the copolymer C, of acrylonitrile. The copolymers C are resin-like, thermoplastic and rubber-free. Particularly preferred copolymers C are those made from styrene and acrylonitrile, made from α-methylstyrene and acrylonitrile, or made from styrene, α-methylstyrene and acrylonitrile. It is also possible for two or more of the copolymers described to be used simultaneously.

Copolymers C of this type frequently arise as by-products during the graft polymerization to prepare component B, especially when large amounts of monomers are grafted onto small amounts of rubber.

The copolymers are known per se and can be prepared by free-radical polymerization, in particular emulsion polymerization, suspension polymerization, solution polymerization or bulk polymerization or precipitation polymerization, and generally have viscosity numbers VN of from 40 to 160 ml/g, determined to DIN 53727 on a 0.5 % strength by weight solution in N,N-dimethylformamide (DMF) at 23° C. Details of these processes are given by way of example by R. Vieweg and G. Daumiller (ed.), Kunststoff-Handbuch, Vol. V "Polystyrol", pp. 118 et seq., Hanser-Verlag, Munich 1969.

### Component D

The inventive molding compositions comprise from 0.5 to 10 % by weight, based on the thermoplastic molding composition, of at least one antistatic agent selected from sulfonated secondary alkanes, having from 6 to 40, preferably from 10 to 35, more preferably from 12 to 35, particular preferably from 18 to 32, also preferably from 11 to 25 carbon atoms (also referred to as component D). Secondary alkane sulfonate means that at least one, preferably exactly one, sulfonic acid group -SO₃H is placed at an secondary carbon atom. Secondary alkane sulfonates (SAS) are also known as sulfonated paraffin. The at least one antistatic agent D is selected from secondary alkane sulfonates (SAS) having from 6 to 40, preferably from 10 to 35, more preferably from 12 to 35, particular preferably from 18 to 32, carbon atoms.

The component D is present in the inventive molding composition from 0.5 to 10 % by weight, preferably from 1 to 7 % by weight, in particular from 2 to 5 % by weight, and more preferably from 3.5 to 4.5 % by weight, based on the thermoplastic molding composition.

In a preferred embodiment the at least one antistatic agent D (component D) is at least one sulfonated alkane according to the following formula III: 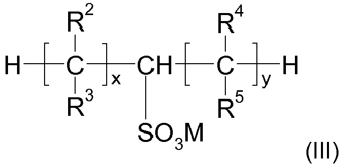
wherein R², R³, R⁴ and R⁵ are independently from each other selected from H, halogen, C₁₋₆ alkyl, C₆₋₁₀cycloalkyl, C₆₋₁₀cycloalkyloxy, C₆₋₁₀aryl, C₆₋₁₀ aryloxy, hydroxy, -SH, carboxylate, amino, nitro and cyano;
x and y are, independently from each other, a number from 1 to 40, preferably from 1 to 35, more preferably from 1 to 32, with the provision that x+y is a number from 5 to 39, preferably from 9 to 34, preferably from 11 to 34, particular preferably from 17 to 31, also preferably from 10 to 24;
M is selected from hydrogen, alkali metal salt or earth alkali metal salt, preferably M is selected from H, Na, and K.

In a preferred embodiment the inventive thermoplastic molding composition comprises from 2 to 5 % by weight, and more preferably from 3.5 to 4.5 % by weight, based on the thermoplastic molding composition, of at least one antistatic agent D (component D) wherein the at least one antistatic agent D is selected from sulfonated alkane according to the formula III as defined above.

Preferably x and y are, independently from each other, a number from 1 to 30, preferably from 1 to 25, with the provision that x+y is a number from 11 to 30.

Preferably the radicals R², R³, R⁴ and R⁵ are independently from each other selected from hydrogen, halogen, and C₁₋₆ alkyl, most preferably R², R³, R⁴ and R⁵ are hydrogen.

In a preferred embodiment the at least one antistatic agent D (component D) is selected from sulfonated alkanes according to the following formula IV: 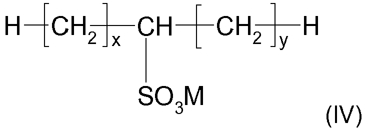 wherein
x and y are, independently from each other, a number from 1 to 38, preferably from 1 to 34, more preferably from 1 to 31, with the provision that x+y is a number from 5 to 39, preferably from 9 to 34, preferably from 11 to 34, particular preferably from 17 to 31, also preferably from 10 to 24;
M is selected from hydrogen, alkali metal salt or earth alkali metal salt; preferably M is selected from H, Na, and K; most preferably M is Na.

In a preferred embodiment the inventive thermoplastic molding composition comprises from 2 to 5 % by weight, and more preferably from 3.5 to 4.5 % by weight, based on the thermoplastic molding composition, of at least one antistatic agent D (component D) selected from sulfonated alkane according to the formula IV as defined above.

The at least one sulfonated secondary alkane having from 6 to 40 carbon atoms (component D) is preferably selected from the group consisting of secondary paraffin sulfates (SPS), secondary alkyl sulfates (SAS), most preferably the at least one secondary alkane sulfonated (component D) is a secondary alkyl sulfates (SAS). Such secondary alkane sulfonates are commercially available, e.g. Armostat®3002, AKZO. Generally they may be obtained by sulfonation of paraffins, especially n-paraffins.

As a skilled person knows the number of carbon atoms of the sulfonated secondary alkanes given above is an average value and the antistatic agent may be a mixture comprising sulfonates alkanes with a distribution of carbon atoms in the chain. Normally, the sulfonation of alkanes, e.g. paraffin, results depending from several factors in a mixture of isomers and homologues primary and secondary alkylsulfonates having mono- and disulfonic substitution.

In a preferred embodiment the thermoplastic molding composition comprises one or more, preferably one, sulfonated secondary alkane as defined above as the only antistatic agent (component D).

### Component E

The inventive composition may comprise from 0 to 50 % by weight, based on the thermoplastic molding composition, of at least one filler E (also referred to as component E). The optional component E is present in the molding compositions of the invention in amounts of from 0 to 50 % by weight, preferably from 0 to 45 % by weight, in particular from 0 to 40 % by weight. The optional component E may be present in the molding compositions from 0.1 to 50 % by weight, preferably from 1 to 45 % by weight, in particular from 1 to 40 % by weight.

Component E is selected from fillers (also termed reinforcing materials). Use may in particular be made of particulate mineral fillers E1 and/or fibrous fillers E2. Use may be made of particulate mineral fillers E1 alone or fibrous fillers E2 alone.

Use may in particular be made of a mixture of mineral fillers E1 and fibrous fillers E2. The proportion of component E1 in the mixtures is preferably from 5 to 95 % by weight and in particular from 5 to 90 % by weight, based on component E, and the proportion of component E2 is preferably from 5 to 95 % by weight and in particular from 10 to 95 % by weight, based on component E.

Preference is given to a thermoplastic molding composition comprising from 1 to 50 % by weight, preferably from 1 to 45 % by weight, more preferably from 1 to 40 % by weight, based on the thermoplastic molding composition, of at least one filler E selected from particulate mineral fillers E1 and fibrous fillers E2.

In a preferred embodiment the invention relates to a thermoplastic molding composition as described comprising the following components:
a) 1 to 96.5 % by weight, based on the thermoplastic molding composition, of at least one aromatic polycarbonate A;
b) 1 to 96.5 % by weight, based on the thermoplastic molding composition, of one or more graft polymer B;
c) 1 to 96.5 % by weight, based on the thermoplastic molding composition, of at least one thermoplastic copolymer C;
d) 0.5 to 10 % by weight, preferably from 1 to 7 % by weight, more preferably from 2 to 5 % by weight, based on the thermoplastic molding composition, of at least one antistatic agent D;
e) 1 to 50 % by weight, preferably from 1 to 45 % by weight, more preferably from 1 to 40 % by weight, based on the thermoplastic molding composition, of at least one filler E selected from particulate mineral fillers E1 and fibrous fillers E2;
f) 0 to 40 % by weight, based on the thermoplastic molding composition of at least one further additive F (also referred to as component F).

Suitable particulate mineral fillers E1 are amorphous silicas, carbonates, such as magnesium carbonate or chalk, powdered quartz, mica, a very wide variety of silicates, such as clays, muskovite, biotite, suzoite, tin maletite, talc, chlorite, phlogophite, feldspar, and calcium silicates, such as wollastonite, or kaolin, particularly calcined kaolin.

In one particularly preferred embodiment, use is made of particulate fillers in which at least 95 % by weight, preferably at least 98 % by weight, of the particles have a diameter (largest dimension), determined on the finished product, of below 45 µM, preferably below 40 µm, and an aspect ratio preferably within the range from 1 to 25, preferably within the range from 2 to 20, determined on the finished product, i.e. generally on an injection molding. The aspect ratio is the ratio of particle diameter to thickness (largest to smallest dimension).

An example of a method for determining the particle diameters here is to take electron micrographs of thin layers of the polymer mixture and to utilize at least 25 filler particles, preferably at least 50 filler particles, for the evaluation. The particle diameters may also be determined by sedimentation analysis as in Transactions of ASAE, p. 491 (1983). The proportion by weight of the fillers below 40 µm can also be measured by a screening-analysis method.

Particularly preferred particulate fillers E1 are selected from the group consisting of talc, kaolin, such as calcined kaolin, wollastonite, or a mixture thereof. Particularly preferred among these is talc with a proportion of at least 95 % by weight of particles with a diameter below 40 µm and with an aspect ratio of from 1.5 to 25, always determined on the finished product. Kaolin preferably has a proportion of at least 95 % by weight of particles with a diameter below 20 µm, and with an aspect ratio of from 1.2 to 20, always determined on the finished product.

As component E2, use is made, for example, of fibrous fillers, such as carbon fibers, potassium titanate whiskers, aramid fibers, or preferably glass fibers. The glass fibers may have been coated with a size and/or with a coupling agent to improve compatibility with the polymer matrix. In a preferred embodiment at least 50 % by weight of the fibrous fillers (glass fibers) have a length above 50 µm. The (glass) fibers used may preferably have a diameter of up to 25 µm, particularly preferably from 5 to 13 µm. It is preferable for at least 70 % by weight of the glass fibers to have a length above 60 µm. It is particularly preferable for the average length of the glass fibers in the finished molding to be from 0.08 to 0.5 mm.

The length of the glass fibers is based on a finished molding, for example obtained by injection molding. When these glass fibers are added to the molding compositions their form may be that of short glass fibers cut to appropriate length or else that of continuous-filament strands (rovings). The form in which carbon fibers or glass fibers are used may also be that of fabrics, mats or glass silk rovings.

### Component F

The composition may comprise from 0 to 40 % by weight, based on the thermoplastic molding composition as optional component one or more further additive F which can be selected from additives commonly known for their use in ASA and/or ABS thermoplastic molding compositions.

The amount of component F present in the molding compositions of the invention is from 0 to 45 % by weight, preferably from 0 to 20 % by weight, in particular from 0 (if present, from 0.1 to 10 % by weight.

Component F can be one or more organic acid, preferably of low molecular weight and preferably halogen-free, which means that they contain no halogens in their molecular skeleton. However, the invention does include acids which have small amounts of halogen-containing contamination. For the purposes of the present invention, acids include hydrates. It is advantageous to use acids which at the processing temperatures used are non-volatile or at low volatility and, respectively, do not decompose or decompose only slightly at temperatures up to about 320° C.

Organic acids are generally present in amounts of from 0 to 2 % by weight, preferably from 0 to 1.8 % by weight and in particular from 0 (if present, from 0.1) to 1.5 % by weight.

The acids may contain one, two or more acid groups, for example up to ten acid groups. It is preferable to use organic acids. Use may be made of either aromatic or else aliphatic acids. It is also possible to use aliphatic/aromatic acids. Preferred acids include mono-, di- and polycarboxylic acids, e.g. palmitic acid, stearic acid, benzoic acid and substituted benzoic acids, isophthalic acid, terephthalic acid, trimellitic acid, sulfonic acids, such as p-toluenesulfonic acid and aliphatic sulfonic acids, fumaric acid, citric acid, mandelic acid and tartaric acid, particularly preferable citric acid and p-toluenesulfonic acid or a mixture of these.

Component F can be one or more a halogen-free phosphorus compound. Any of the known conventional phosphorus-containing flame retardants may be used as component F. It is preferable to use the flame retardants listed in DE-A-40 34 336 and/or those listed in EP-A 0 552 397. Examples of these are tris(2,6-dimethylphenyl) phosphate, triphenyl phosphate, tricresyl phosphate, diphenyl 2-ethylcresyl phosphate, diphenyl cresyl phosphate, tris(iso-propylphenyl) phosphate, and also bis(phenyl) 4-phenylphenyl phosphate, phenyl bis(4-phenylphenyl)phosphate, tris(4-phenylphenyl) phosphate, bis(phenyl)benzylphenyl phosphate, phenyl bis(benzylphenyl)phosphate, tris(benzylphenyl)phosphate, bisphenyl[1-phenylethyl]phenyl phosphate, phenyl bis[1-phenylethyl]phenyl phosphate, tris[(1-phenylethyl)phenyl]phosphate, bisphenyl(1-methyl-1-phenylethyl)phenyl phosphate, phenyl bis[(1-methyl-1-phenylethyl)phenyl]phosphate, tris[(1-methyl-1-phenylethyl)phenyl]-phosphate, phenyl bis[4-(1-phenylethyl)-2,6-dimethylphenyl]-phosphate, bisphenyl 2,4-dibenzylphenyl phosphate, bisphenyl 2,4-di(1-phenylethyl)-phenyl phosphate, and bisphenyl 2,4-di(1-methyl-1-phenylethyl)phenyl phosphate. They may also be used in a mixture with triphenylphosphine oxide or tris(2,6-dimethylphenyl)phosphine oxide.

Preferred flame retardants however are resorcinol diphosphate and, correspondingly, higher oligomers, hydroquinone diphosphate and corresponding higher oligomers.

Reference may also be made to the compounds described in EP-A 0103 230, EP-A 0174 493, EP-A 0206 058, EP-A 0363 608 and EP-A 0558 266.

The molding composition may comprise as optional component F a polymer different from A, B and C which is miscible with the mixed phase formed from components A, B and C or are dispersible therein. For example the polymer different from A, B and C may be a common known compatabilizer, which preferably take up a position at the interface between the phases formed from components A, B and/or C and thus ensure better compatibility of the two phases. The polymer different from A, B and C can for example be selected from customary (grafted) rubbers, such as ethylene-vinyl acetate rubbers, silicone rubbers, thermoplastic polyurethanes, polyether rubbers, polyetherester rubbers, hydrogenated diene rubbers, polyalkenamer rubbers, acrylate rubbers, ethylene-propylene rubbers, ethylene-propylene-diene rubbers and butyl rubbers, methyl methacrylate-butadiene-styrene (MBS) rubbers or methyl methacrylate-butyl acrylate-styrene rubbers. Compatibilizers may also obtainable from vinyl monomers, such as styrene or acrylonitrile, or from acrylates or from olefins, and from hydroxy-containing monomers, such as hydroxystyrenes.

Component F can be one or more other additive selected from the group consisting of processing aids, stabilizers and oxidation retarders, agents to inhibit decomposition caused by heat or by ultraviolet light (e.g. UV absorbers and stabilizers), lubricants, mold-release agents, flame retardants, dyes, pigments and plasticizers. Their amount is generally from 0 to 40 % by weight, preferably from 0 to 20 % by weight, in particular from 0 (if present, from 0.2) to 10 % by weight, based on the total weight of the composition.

Pigments and dyes are generally present in amounts of from 0 to 4 % by weight, preferably from 0 to 3.5% by weight and in particular from 0 (if present, from 0.5) to 3 % by weight.

The pigments for pigmenting thermoplastics are well known (see, for example, R. Gächter and H. Muller, Taschenbuch der Kunststoffadditive, Carl Hanser Verlag, 1983, pp. 494-510). The first preferred group of pigments is that of white pigments, such as zinc oxide, zinc sulfide, white lead (2 PbCO₃.Pb(OH)₂), lithopones, antimony white and titanium dioxide. Of the two most commonly found crystalline forms of titanium dioxide (rutile and anatase) it is in particular the rutile form which is used for white coloration of the molding compositions of the invention.

Black color pigments which may be used according to the invention are iron oxide black (Fe₃O₄), spinel black (Cu(Cr,Fe)₂O₄), manganese black (a mixture of manganese dioxide, silicon oxide and iron oxide), cobalt black and antimony black, and also particularly preferably carbon black, mostly used in the form of furnace black or gas black (see in this connection G. Benzing, Pigmente für Anstrichmittel, Expert-Verlag (1988), p. 78 et seq.).

According to the invention, it is, of course, also possible to achieve particular shades by using inorganic non-black colored pigments, such as chromium oxide green, or organic non-black color pigments, such as azo pigments or phthalocyanines. Pigments of this type are widely available commercially.

It may moreover be advantageous to use a mixture of the pigments and, respectively, dyes mentioned, e.g. carbon black with copper phthalocyanines, since generally the dispersion of color in the thermoplastic becomes easier.

Examples of other suitable colorants are described in R. Gächter and H. Müller (eds.), Plastics Additives Handbook, 4th ed. 1993, Reprint November 1996, Hanser Verlag Munich, on pp. 647-676.

Mention should also be made of fluorescent plasticizers, e.g. bisbenzoxazoles, triazine phenylcoumarins, benzotriazol phenylcoumarins, naphthotriazol phenylcoumarins and bis(styryl)biphenyls. The book mentioned by Gächter and Müller (4th edition 1993) gives other examples on pp. 779-785.

Examples of oxidation retarders and heat stabilizers which may be added to the thermoplastic materials according to the invention are halides of metals of group I of the Periodic Table, e.g. sodium halides and lithium halides, where appropriate in combination with copper (I) halides, e.g. with chlorides, bromides or iodides. The halides, in particular of copper, may also contain electron-rich π ligands. Examples of copper complexes of this type are Cu halide complexes with, for example, triphenylphosphine. It is also possible to use zinc fluoride and zinc chloride.

Use may also be made of sterically hindered phenols, hydroquinones, substituted representatives of this group, secondary aromatic amines, where appropriate in combination with phosphorus-containing acids and, respectively, salts of these, and mixtures of these compounds, preferably in concentrations up to 1 % by weight, based on the weight of the mixture.

Examples of UV stabilizers are various substituted resorcinols, salicylates, benzotriazoles and benzophenones, which are usually used in amounts of up to 2 % by weight, preferably in an amount from 1 to 2 % by weight.

Lubricants and mold-release agents, generally used in amounts of up to 1% by weight of the thermoplastic material, are stearic acid, stearyl alcohol, alkyl stearates and stearamides, and also esters of pentaerythritol with long-chain fatty acids. It is also possible to use the stearates of calcium, of zinc or of aluminum, or else dialkyl ketones, e.g. distearyl ketone. Use may moreover be made of ethylene oxide-propylene oxide copolymers as lubricants and mold-release agents.

It is particularly advantageous to use UV stabilizers and heat stabilizers for polycarbonate and styrene copolymers. Examples of suitable stabilizers are also listed in DE-A-44 19 897. Transesterification inhibitors may also be present, for example phosphates, phosphites or phosphonites.

### Preparation of the molding composition

The present invention is further directed to a process for producing a thermoplastic molding composition as described above, wherein the components A to D and, optionally (if present), components E and F are mutually mixed with one another in any desired order at temperatures of 100 to 300°C. Preferably the components are mixed at temperatures of 100 to 300°C, then kneaded and extruded. Preferably, the components are mixed at temperatures of 100 to 300°C and a pressure of 1 to 50 bar, then kneaded and extruded.

The preferred embodiments described in connection with the inventive thermoplastic molding composition can be applied accordingly.

The thermoplastic molding compositions of the invention are prepared by processes known per se, by mixing the components A to D and optionally (i.e. if present) the components E and/or F. It may be advantageous to premix individual components. It is also possible for the components to be mixed in solution, with removal of the solvents. Examples of suitable organic solvents are chlorobenzene, mixtures of chlorobenzene and methylene chloride, and mixtures of chlorobenzene and aromatic hydrocarbons, such as toluene. It is preferable to work without chlorinated solvents. One way of concentrating the solvent mixtures by evaporation is to use vented extruders.

Any known method may be used to mix the (for example dry) components A to D and, where appropriate, E and F. It is preferable to mix at temperatures of 200 to 320° C by joint extrusion, kneading or roll-milling of the components, the components having been isolated in advance, where appropriate, from the solution obtained during the polymerization, or from the aqueous dispersion.

A process for preparing the molding compositions of the invention has therefore also been found, by mixing the dry components A to D and, where appropriate, E and/or F at a temperature from 200 to 320° C.

The thermoplastic molding compositions of the invention may be processed by known methods of thermoplastic processing, for example by extrusion, injection molding, calendering, blow molding or sintering.

### Use of the molding composition

The molding compositions of the invention may be used to produce moldings, fibers or films. They may moreover particularly preferably be used to produce bodywork parts. In this aspect, the present invention is directed to the use of the inventive thermoplastic molding compositions as described above for production of moldings, fibers or films, in particular molded articles, self-supporting films, self-supporting sheets or fibers.

The molding compositions are for example suitable for producing bodywork parts (e.g. in the automotive sector), in particular for producing large-surface-area exterior bodywork parts, such as heel surrounds, hatchback doors, front hoods, etc. Preferably the invention is directed to the use of thermoplastic molding compositions as described above for the production of moldings, fibers or films for automotive components or parts of electronic equipment.

In a preferred embodiment the invention provides the use of thermoplastic molding compositions as described above for production of moldings, fibers or films for motor vehicle interiors, preferably selected from protective coverings, storage compartments, dashboard supports, door breasts, parts for the center console, or else retaining elements for the radio or air-conditioning system, covers for the center console, covers for the radio, the air-conditioning system or the ashtray, prolongations of the center console, storage pockets, storage areas for the driver's door or the passenger's door, storage areas for the central console, compartments for the driver's or passenger's seats, such as seat coverings, defroster ducts, internal mirror housings, sun-roof elements, such as sun-roof frames, car roof lining, covers and protective surrounds for instruments, instrument sockets, upper and lower shelves for the steering column, air ducts, air blowers and adapters for personal air-flow devices and defroster ducts, door side coverings, coverings in the knee area, air-outlet nozzles, defroster apertures, switches and levers, and also air-filter ducts and ventilation ducts, more preferably car roof lining.

The preferred embodiments described in connection with the inventive thermoplastic molding composition can be applied accordingly.

The invention also provides a molding, fiber or film (e.g. a molded article, a fiber, a self-supporting film or a self-supporting sheet) made from a thermoplastic molding composition as described above. Preferably the invention is directed to the molding, fiber or film, wherein the molding, fiber or film is a motor vehicle interior, in particular a motor vehicle interior mentioned above, more preferably a car roof lining.

The molding compositions of the invention, and also moldings, fibers, and films exhibit high stiffness, good toughness, less odor emission and good antistatic properties, i.e. show a sufficient charge release on the molding surface.

The excellent mechanical properties and surface properties of the novel moldings make them suitable for a wide variety of moldings comprising these molding compositions. The following are mentioned merely as examples: camera casings, casings for mobile telephones, motor vehicle interiors, tube sections for binoculars, vapor ducts for vapor-extraction hoods, parts for pressure cookers, housings for hot-air grills and pump housings, side-protection panels, and in particular side aprons for trucks or buses.

The properties of the novel moldings and molded articles make them particularly suitable for applications in motor vehicles. The moldings produced from the novel molding compositions are therefore in particular light-switch housings, lamp housings, housings for the central electrical system, multipoint connectors, plug connectors, housings for ABS controllers, and identification plate supports, and also roof-racks.

The good emission performance of the novel moldings and molded articles makes them particularly suitable for applications in motor vehicle interiors. The novel moldings produced from the novel molding compositions are therefore preferably protective coverings, storage compartments, dashboard supports, door breasts, parts for the center console, or else retaining elements for the radio or air-conditioning system, covers for the center console, covers for the radio, the air-conditioning system or the ashtray, prolongations of the center console, storage pockets, storage areas for the driver's door or the passenger's door, storage areas for the central console, compartments for the driver's or passenger's seats, such as seat coverings, defroster ducts, internal mirror housings, sun-roof elements, such as sun-roof frames, car roof lining, covers and protective surrounds for instruments, instrument sockets, upper and lower shelves for the steering column, air ducts, air blowers and adapters for personal air-flow devices and defroster ducts, door side coverings, coverings in the knee area, air-outlet nozzles, defroster apertures, switches and levers, and also air-filter ducts and ventilation ducts. These applications are merely examples of possible applications in motor vehicle interiors.

### Use of sulfonated secondary alkanes

The present invention is also directed to the use of sulfonated secondary alkanes, having from 6 to 40, preferably from 10 to 35, more preferably from 12 to 35, particular preferably from 18 to 32 carbon atoms as antistatic agent D in thermoplastic molding compositions (in particular PC/ASA blends) as described above comprising
a) 1 to 97.5 % by weight, based on the thermoplastic molding composition, of at least one aromatic polycarbonate A (also referred to as component A);
b) 1 to 97.5 % by weight, based on the thermoplastic molding composition, of one or more graft polymer B (also referred to as component B) made from
   b1) 40 to 80 % by weight, based on the graft polymer B, of an graft base made from an elastomeric polymer B1 based on alkyl acrylates having from 1 to 8 carbon atoms in the alkyl radical, on ethylene-propylene, on dienes, or on siloxanes, and having a glass transition temperature below 0° C,
   b2) 20 to 60 % by weight, based on the graft polymer B, of a graft B2 made from
      b21) 60 to 95 % by weight, based on the graft B2, of styrene or of substituted styrenes B21 of the formula I 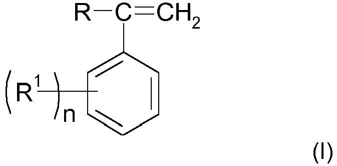
         wherein R is C₁-C₈-alkyl or hydrogen;
         R¹ is C₁-C₈-alkyl or hydrogen, with the provision that not both of R and R¹ are hydrogen, and
         n is 1, 2 or 3,
         or a mixture of these compounds, and
      b22) 5 to 40 % by weight, based on the graft B2, of at least one unsaturated nitrile B22, and
c) 1 to 97.5 % by weight, based on the thermoplastic molding composition, of at least one thermoplastic copolymer C (also referred to as component C) made from
   c1) 60 to 85 % by weight, based on the thermoplastic copolymer C, of styrene or of substituted styrenes C1 of the formula I, or a mixture of these compounds, and
   c2) 15 to 40 % by weight, based on the thermoplastic copolymer C, of at least one unsaturated nitrile C2.

The preferred embodiments (e.g. related to components A to F) described in connection with the inventive thermoplastic molding composition apply accordingly.

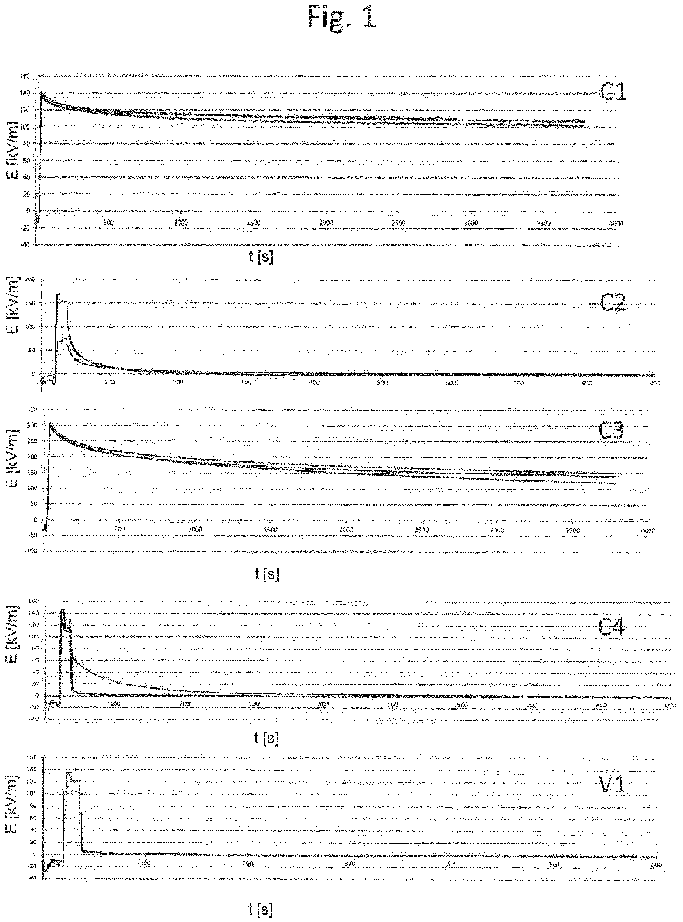

Figure 1 shows the charge decay curves of PC/ASA samples (Luran® SC KR2863C) with different antistatic agents according to the examples C1 to C4 and V1. The decay curves show the field strength E given in kV/m (kilo volt per meter) (on y axis) in dependency of the time t in s (seconds) (on x axis). The examples C1 to C4 comprise different antistatic agent CESA®-stat (Clariant). The example V1 comprises the antisatic agent Armostat® 3002 (AKZO) which is a sodium sec. alkanesulfonate.

The following examples and claims illustrate the invention.

### Examples

### A Preparation of the molding compositions

The following components were used:
Luran® SC KR2863C in VW Perl Grey KU Y20 - Styrolution color GR37039 which is a blend of polycarbonate and ASA characterized by a melt volume-flow rate of 16-18 cm³/10 min (measured at 260 °C/5kg according to ISO1133). The blend is composed of 70 % by weight of polycarbonate; 10.5 % by weight of Luran® VLL1970; 9 % by weight of Luran® S VL8; 8 % by weight of Luran® S VL18. Luran® VLL1970, Luran® S VL8, and Luran® S VL18 are ASA copolymers available from Ineos Styrolution (Frankfurt). Thus, the ASA/PC blend Luran® SC KR2863C refers to the components A, B, and C.
0.5 % by weight Loxiol G70S (commercial demolding agent) and
2 % by weight pigments and stabilizers.

The following antistatic agents (referring to component D) were used
- D1:: Antistatic agent CESA®-stat OCA 0025589, OCA 0025693 and OCA 0025694 (from Clariant, Germany), which are permanent antistatic agent master batches containing a polyether-polyamide block copolymer, product form: master batch granules
- D2:: Irgastat® P22 (BASF SE, Germany), which is a permanent antistatic agent based on a polyether-polyamide block copolymer, product form: granules
- D3:: Armostat® 3002 (AKZO) (sodium sec. alkanesulfonate, CAS No 68608-15-1), product form: flakes, Armostat® 3002 is dried before use

The PC/ASA blend and the antistatic component D were mixed in a twin-screw extruder at from 250 to 280 °C, extruded, cooled and pelletized. The dried pellets were processes at 260 °C to give testing samples and automobile plaques of DIN A5 format. The compositions are summarized in the following table 1:

**Table 1: Molding compositions - Part I (all values given in % by weight)**

| | C1 | C2 | C3 | C4 | V1 |
|---|---|---|---|---|---|
| Luran® SC KR2863C | 97.5 | 87.5 | 92.5 | 90.5 | 93.5 |
| Loxiol | 0.5 | 0.5 | 0.5 | 0.5 | 0.5 |
| pigments and stabilizers | 2 | 2 | 2 | 2 | 2 |
| D1 | - | 10 (OCA 0025589) | 5 (OCA 0025693) | 7 (OCA 0025694) | - |
| D3 | - | - | | - | 4 |

Further the following compositions A to H were prepared as described above. The pigments were a mixture comprising chrome titan yellow, iron oxide red, phthalo green, carbon black and titanium dioxide.

Tinuvin® 329 (BASF SE) is a UV-light stabilizer comprising the chemical compound 2-(2H-benzotriazol-2-yl)-4-(1,1,3,3-tetramethylbutyl)phenol.

**Table 2: Molding compositions - Part II (all values given in % by weight)**

| | A | B | C | D | E | F | G | H |
|---|---|---|---|---|---|---|---|---|
| Polycarbonat | 61.7 | 61.1 | 60.5 | 59.8 | 63.9 | 63.1 | 61.9 | 58.6 |
| Luran® VLL1970 | 11.6 | 11.5 | 11.4 | 11.3 | 11.9 | 11.8 | 11.6 | 11.0 |
| Luran® S VL8 | 7.1 | 7.0 | 7.0 | 6.9 | 7.3 | 7.2 | 7.1 | 6.7 |
| Luran® S VL18 | 7.9 | 7.8 | 7.7 | 7.7 | 8.1 | 8.0 | 7.9 | 7.4 |
| Tinuvin 329 | 0.5 | 0.5 | 0.5 | 0.5 | 0.5 | 0.5 | 0.5 | 0.5 |
| Fatty acid ester | 0.4 | 0.4 | 0.4 | 0.4 | 0.5 | 0.5 | 0.4 | 0.4 |
| Pigments | 5.7 | 5.6 | 5.5 | 5.4 | 5.8 | 5.8 | 5.7 | 5.4 |
| D1 | 5.0 | 6.0 | 7.0 | 8.0 | - | - | - | - |
| D2 | - | - | - | - | - | - | 5.0 | 10.0 |
| D3 | - | - | - | - | 2.0 | 3.1 | - | - |
| Sum | 100.0 | 100.0 | 100.0 | 100.0 | 100.0 | 100.0 | 100.0 | 100.0 |

### B Methods of measurement

a. The flowabilitiy of the compositions was determined as melt volume flow rate (MVR) according to DIN 53 735 or ISO1133 at 260 °C with 5 kg load.
Further, the melt volume flow rate (MVR) for the compositions A to F was determined at different temperatures in the range of 220 to 300 °C. The results are summarized in the following table 3.

**Table 3: Influence of temperature on MVR - all values given in cm³/10 min**

| | A | B | C | D | E | F |
|---|---|---|---|---|---|---|
| MVR 220 °C, 5kg | 3.14 | 3.15 | 3.45 | 3.42 | 2.99 | 3.66 |
| MVR 230 °C, 5kg | 6.16 | 6.18 | 6.52 | 6.75 | 5.69 | 6.44 |
| MVR 240 °C, 5kg | 10.66 | 10.99 | 11.78 | 12.09 | 11.40 | 9.66 |
| MVR 250 °C, 5kg | 15.70 | 16.60 | 18.40 | 18.10 | 17.70 | 19.50 |
| MVR 260 °C, 5kg | 29.40 | 29.79 | 34.33 | 31.32 | 29.94 | 29.97 |
| MVR 270 °C, 5kg | 44.98 | 48.18 | 52.90 | 53.56 | 42.00 | 52.05 |
| MVR 280 °C, 5kg | 75.12 | 82.04 | 89.41 | 89.75 | 89.70 | 66.59 |
| MVR 300 °C, 5kg | 163.50 | - | - | - | - | - |

b. The Vicat B heat distortion temperature was determined from the Vicat softening point determined on standard small specimens according to DIN 53 460, using a force of 49.05 N and a temperature rise at 50 K per hour.
c. Modulus of elasticity was determined according to ISO 527 on tensile specimens by tensile testing at 23 °C. Tensile stress at yield was determined to ISO 527 at 23°C.
d. Notched impact strength aₖ was tested according to ISO 179 1 eA at 23 °C, on ISO specimens.
e. The weathering resistance of test speciems were determined according to PV1303 (5 cycles). For that purpose test specimens (60 x 60 x 2 mm, produced to ISO 294 in a family mold at a melt temperature of 260°C and a mold temperature of 60°C) were subjected to weatherization by xenon-arc test to PV1303 5 cycles. Following the 350 h weatherization the surface gloss of all samples was measured to German standard specification DIN 67530 at a 60° viewing angle. The surface was evaluated in terms of the gray scale (5: no change, 1: massive change) to ISO 105-A02 (1993). Further, the color data Yellow index, and the CIELAB values DE*, DL*, Da* and Db*, also referred to as DE, DL, Da and Db, were measured.

The results before and after weathering are summarized in Table 4.

**Table 4. Weathering resistance of molding compositions- Part I**

| Comp. | Time [h] | Yellow-index | Gloss | DE | DL | Da | Db | Gray scale |
|---|---|---|---|---|---|---|---|---|
| C1 | 0 | 6.6 | 88.9 | 0.0 | 0.0 | 0.0 | 0.0 | - |
| | 350 | 11.5 | 84.9 | 2.3 | -0.1 | -0.4 | 2.2 | 4.0 |
| C2 | 0 | 6.7 | 99.7 | 0.0 | 0.0 | 0.0 | 0.0 | - |
| | 350 | 10.1 | 93.0 | 1.6 | -0.3 | -0.3 | 1.6 | 4.0 |
| C3 | 0 | 6.8 | 97.3 | 0.0 | 0.0 | 0.0 | 0.0 | - |
| | 350 | 14.5 | 95.1 | 3.6 | -0.5 | -0.6 | 3.5 | 3 to 4 |
| C4 | 0 | 6.7 | 90.2 | 0.0 | 0.0 | 0.0 | 0.0 | - |
| | 350 | 21.9 | 78.9 | 5.9 | -1.2 | -0.7 | 6.8 | 2 |
| V1 | 0 | 6.1 | 82 | 0 | 0 | 0 | 0 | - |
| | 350 | 20.5 | 61.4 | 6.62 | -1.15 | -0.78 | 6.47 | 2 |

f. The antistatic properties were determined by the determination of the charge decay. For this samples of 80 mm by 2 mm are conditioned for 24 h at 23 °C and 50 % moisture. Then the samples are loaded with 20 to 70 kv for 15 seconds (s) and the charge decay is measured. The charge decay was classified as follows:

| Charge decay | Time t(1/2) | Resistivity [Ohm] |
|---|---|---|
| Very fast | < 100 sec | < 10¹¹ |
| Medium | 100-200 sec | 10¹¹-10¹⁶ |
| Poor | >7.5 min | >10¹⁶ |

The charge decay curves of Examples C1 to C4 and V1 are shown in Figure 1. The results are given in the following table 5.

**Table 5: Antistatic properties of molding compositions- Part I**

| | C1 | C2 | C3 | C4 | V1 |
|---|---|---|---|---|---|
| Charge decay | No decay | Fast decay, 0 V after 180 sec | No decay | Very fast decay O V after 50 sec | Very fast decay O V after 50 sec |

The permanent antistatic agents from Clariant (CESA®-stat) need to be added in an amount of more than 7 % by weight (C2 and C4) in order to obtain a sufficient antistatic effect. Otherwise, a sufficient antistatic effect can be obtained using 4 % by weight or less Armostat® antistatic agent.

The antistatic properties of compositions A to H are summarized in table 6.

**Table 6: Antistatic properties of molding compositions- Part II**

| | A | B | C | D | E | F |
|---|---|---|---|---|---|---|
| Electrostatic cross charge, [kV/m] | 91 | 64 | 55 | 55 | 43 | 46 |
| Half life [s] | 105 | 23 | 29 | 20 | 10 | 11 |
| Remaining charge after 60 s, [kV/m] | 56 | 22 | 20 | 19 | 13 | 14 |
| Remaining charge after 600 s, [kV/m] | 11 | 3 | 3 | 3 | 1 | 2 |
| Remaining charge after 3600 s, [kV/m] | 0 | 0 | 0 | 0 | 0 | 0 |
| Decay [%] | 100 | 100 | 100 | 100 | 100 | 100 |

The molding compositions E and F according to the invention show a faster charge decay, in particular in the first 60 seconds, in comparison to the moldings with the permanent antistatic agent CESA®-stat. The lower level of antistatic agent (2-3 % by weight) in E and F also leads to higher Vicat temperature (see Table 8).
The PC/ASA compositions E and F and V1 exhibit a sufficient and improved antistatic affect. Also the antistatic finishing using CESA®-stat is more expensive than the antistatic finishing with Armostat®. For example an dosage of 5 % by weight CESA®-stat (see comparative example C3) cannot lead to an sufficient antistatic modification. The permanent antistatic agents require an higher level of about 7 % by weight or more (see comparative example C2 and C4) to produce an sufficient antistatic effect, wherein this antistatic modification is much more expensive.
g. The heat aging was determined at 90°C for 1000 hours using 3 automobile plate the surface appearance was determined by loss of gloss. Heat aging was conducted at 90 °C for 1,000 h and at 500 °C fpr 1,000 h. Gloss and color of the samples before and after aging was measured. The heat aging data did not show any change of gloss and color before and after aging.
h. The emission was determined according to internal method via determination of the total volatile organic compounds (TVOC) given in ppm.

### C Further test results

The properties of the moldings were determined as described above using suitable test specimens produced from the compositions C1 to C4 and V1 and A to H. The following results were obtained.

**Table 7: Properties of molding compositions- Part I**

| | C1 | C2 | C3 | C4 | V1 |
|---|---|---|---|---|---|
| MVR | 16 | 29 | 26 | 24 | 30 |
| [cm³/10 min] | | | | | |
| Tensile Modulus | 2420 | 2183 | 2437 | 2248 | 2266 |
| [MPa] | | | | | |
| Strength at yield | 58 | 53 | 58 | 56 | 56 |
| [MPa] | | | | | |
| Elongation at break | 70 | 116 | 19 | 129 | 19 |
| [%] | | | | | |
| Notched impact strength | 74 | 59 | 48 | 96 | 72 |
| [kJ/m2] | | | | | |
| Vicat softening point [°C] | 129 | 120 | 128 | 122 | 124 |
| TVOC [ppm] | 17 | 23 | 14 | 33 | 27 |

**Table 8: Properties of molding compositions- Part II**

| | A | B | C | D | E | F | G | H |
|---|---|---|---|---|---|---|---|---|
| MVR, 260/5 [cm³/10 min] | 27.5 | 29.2 | 30.8 | 32.9 | 27.3 | 33.5 | 31.0 | 39.1 |
| Tensile Modulus [MPa] | 2424 | 2405 | 2397 | 2361 | 2448 | 2431 | 2493 | 2338 |
| Strength at yield [MPa] | 57.2 | 56.8 | 56.7 | 56.0 | 58.9 | 57.5 | 59.3 | 56.6 |
| Notched impact strength [kJ/m2] | 64.1 | 65.2 | 70.6 | 63.0 | 65.0 | 60.5 | 41.8 | 23.4 |
| Vicat softening point [°C] | 124.9 | 125.4 | 121 | 121.5 | 125.6 | 125.6 | 123.0 | 120.5 |

Generally, the mechanical data show good results and the mechanical properties are not adversely affected by addition of the dry alkylsulfonate antistatic agent. Also, thermal stability properties of the antistatic compositions of the invention, e.g. shown by Vicat point, were not significantly affected versus reference C1.

The tested polymer blend compositions are process stable up to 270°C, preferably up to 300 °C and do not exhibit increase emissions (TVOC).

## Claims

1. A thermoplastic molding composition comprising the following components:
a) 1 to 97.5 % by weight, based on the thermoplastic molding composition, of at least one aromatic polycarbonate A;
b) 1 to 97.5 % by weight, based on the thermoplastic molding composition, of one or more graft polymer B made from
b1) 40 to 80 % by weight, based on the graft polymer B, of an graft base made from an elastomeric polymer B1 based on alkyl acrylates having from 1 to 8 carbon atoms in the alkyl radical, and having a glass transition temperature below 0° C, wherein the glass transition temperature is determined as indicated in the description,
b2) 20 to 60 % by weight, based on the graft polymer B, of a graft B2 made from
b21) 60 to 95 % by weight, based on the graft B2, of styrene or of substituted styrenes B21 of the formula I 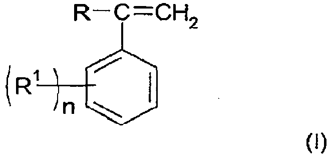
wherein R is C₁-C₈-alkyl or hydrogen;
R¹ is C₁-C₈-alkyl or hydrogen, with the provision that not both of R and R¹ are hydrogen, and n is 1, 2 or 3,
or a mixture of these compounds, and
b22) 5 to 40 % by weight, based on the graft B2, of at least one unsaturated nitrile B22;
c) 1 to 97.5 % by weight, based on the thermoplastic molding composition, of at least one thermoplastic copolymer C made from
c1) 60 to 85 % by weight, based on the thermoplastic copolymer C, of styrene or of substituted styrenes C1 of the formula I, or a mixture of these compounds, and
c2) 15 to 40 % by weight, based on the thermoplastic copolymer C, of at least one unsaturated nitrile C2;
d) 0.5 to 10 % by weight, based on the thermoplastic molding composition, of at least one antistatic agent D selected from sulfonated alkanes, wherein the at least one antistatic agent D is selected from secondary alkane sulfonates, having from 6 to 40 carbon atoms;
e) 0 to 50 % by weight, based on the thermoplastic molding composition, of at least one filler E;
f) 0 to 40 % by weight, based on the thermoplastic molding composition, of at least one further additive F.

2. The thermoplastic molding composition according to claim 1, wherein the at least one aromatic polycarbonate A is based on biphenols of the formula II 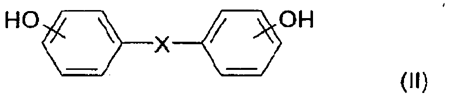 where X is a single bond, C₁-C₃-alkylene, C₂-C₃-alkylidene, C₃-C₆-cycloalkylidene, or else -S- or -SO₂-.

3. The thermoplastic molding composition according to claim 1 or 2, wherein the graft bases B1 of the graft polymer B is composed of:
b11) 70 to 99.9 % by weight, based on the graft base B1, of at least one alkyl acrylate B11 having from 1 to 8 carbon atoms in the alkyl radical,
b12) 0 to 29.5 % by weight, based on the graft base B1, of another copolymerizable monoethylenically unsaturated monomer B12, and
b13) 0.1 to 5 % by weight, based on the graft base B1, of a copolymerizable, polyfunctional, crosslinking monomer B13,
wherein the entirety of B11, B12 and B13 gives 100 % by weight.

4. The thermoplastic molding composition according to any of claims 1 to 3, wherein the copolymer C is composed of 70 to 83 % by weight, based on the copolymer C, of styrene and from 17 to 30 % by weight, based on the copolymer C, of acrylonitrile.

5. The thermoplastic molding composition according to any of claims 1 to 4, wherein the thermoplastic molding composition comprises from 2 to 5 % by weight of at least one antistatic agent D wherein the at least one antistatic agent D is selected from sulfonated alkanes according to the following formula IV: 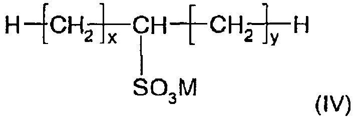
wherein x and y are, independently from each other, a number from 1 to 38, with the provision that x+y is a number from 5 to 39;
M is selected from hydrogen, alkali metal salt or earth alkali metal salt.

6. The thermoplastic molding composition according to any of claims 1 to 5, wherein the composition comprises from 1 to 50 % by weight, based on the thermoplastic molding composition, of at least one filler E selected from particulate mineral fillers E1 and fibrous fillers E2.

7. A process for producing a thermoplastic molding composition according to any of claims 1 to 6, wherein the components A to D and, optionally, components E and F are mutually mixed with one another in any desired order at temperatures of 100 to 300°C.

8. The use of thermoplastic molding compositions according to any of claims 1 to 6 for production of moldings, fibers or films.

9. The use of thermoplastic molding compositions according to claim 8 for the production of moldings, fibers or films for automotive components or parts of electronic equipment.

10. The use of thermoplastic molding compositions according to claim 8 or 9 for the production of moldings, fibers or films for motor vehicle interiors.

11. A molding, fiber or film made from a thermoplastic molding composition according to any of claims 1 to 6.

12. The molding, fiber or film according to claim 11 wherein the the molding, fiber or film is a motor vehicle interior.

13. Use of secondary alkane sulfonates having from 6 to 40 carbon atoms as antistatic agent D in thermoplastic molding compositions comprising:
a) 1 to 97.5 % by weight, based on the thermoplastic molding composition, of at least one aromatic polycarbonate A;
b) 1 to 97.5 % by weight, based on the thermoplastic molding composition, of one or more graft polymer B made from
b1) 40 to 80 % by weight, based on the graft polymer B, of an graft base made from an elastomeric polymer B1 based on alkyl acrylates having from 1 to 8 carbon atoms in the alkyl radical, on ethylene-propylene, on dienes, or on siloxanes, and having a glass transition temperature below 0° C, wherein the glass transition temperature is determined as indicated in the description,
b2) 20 to 60 % by weight, based on the graft polymer B, of a graft B2 made from
b21) 60 to 95 % by weight, based on the graft B2, of styrene or of substituted styrenes B21 of the formula I 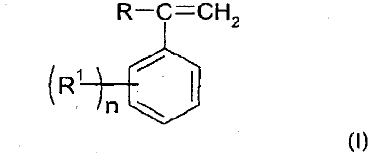 wherein
R is C₁-C₈-alkyl or hydrogen;
R¹ is C₁-C₈-alkyl or hydrogen, with the provision that not both of R and R¹ are hydrogen, and
n is 1, 2 or 3,
or a mixture of these compounds, and
b22) 5 to 40 % by weight, based on the graft B2, of at least one unsaturated nitrile B22, and
c) 1 to 97.5 % by weight, based on the thermoplastic molding composition, of at least one thermoplastic copolymer C made from:
c1) 60 to 85 % by weight, based on the thermoplastic copolymer C, of styrene or of substituted styrenes C1 of the formula I, or a mixture of these compounds, and
c2) 15 to 40 % by weight, based on the thermoplastic copolymer C, of at least one unsaturated nitrile C2.

## Patentansprüche

1. Thermoplastische Formmasse, umfassend folgende Komponenten:
a) 1 bis 97,5 Gew.-%, bezogen auf die thermoplastische Formmasse, mindestens eines aromatischen Polycarbonats A;
b) 1 bis 97,5 Gew.-%, bezogen auf die thermoplastische Formmasse, eines oder mehrerer Pfropfpolymere B aus
b1) 40 bis 80 Gew.-%, bezogen auf das Pfropfpolymer B, einer Pfropfgrundlage aus einem kautschukelastischen Polymer B1 auf der Basis von Alkylacrylaten mit 1 bis 8 Kohlenstoffatomen im Alkylrest und mit einer Glasübergangstemperatur unter 0 °C, wobei die Glasübergangstemperatur wie in der Beschreibung angegeben gemessen wird,
b2) 20 bis 60 Gew.-%, bezogen auf das Pfropfpolymer B, einer Pfropfauflage B2 aus
b21) 60 bis 95 Gew.-%, bezogen auf die Pfropfauflage B2, Styrol oder substituierten Styrolen B21 der Formel I 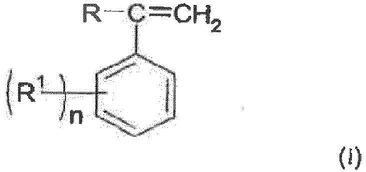
worin R für C₁-C₈-Alkyl oder Wasserstoff steht;
R¹ für C₁-C₈-Alkyl oder Wasserstoff steht, mit der Maßgabe, dass nicht R und R¹ beide für Wasserstoff stehen, und n für 1, 2 oder 3 steht,
oder einer Mischung dieser Verbindungen, und
b22) 5 bis 40 Gew.-%, bezogen auf die Pfropfauflage B2, mindestens eines ungesättigten Nitrils B22;
c) 1 bis 97,5 Gew.-%, bezogen auf die thermoplastische Formmasse, mindestens eines thermoplastischen Copolymers C aus
c1) 60 bis 85 Gew.-%, bezogen auf das thermoplastische Copolymer C, Styrol oder substituierten Styrolen C1 der Formel I oder eine Mischung dieser Verbindungen und
c2) 15 bis 40 Gew.-%, bezogen auf das thermoplastische Copolymer C, mindestens eines ungesättigten Nitrils C2;
d) 0,5 bis 10 Gew.-%, bezogen auf die thermoplastische Formmasse, mindestens eines Antistatikums D, das aus sulfonierten Alkanen ausgewählt ist, wobei das mindestens eine Antistatikum D aus sekundären Alkansulfonaten mit 6 bis 40 Kohlenstoffatomen ausgewählt ist;
e) 0 bis 50 Gew.-%, bezogen auf die thermoplastische Formmasse, mindestens eines Füllstoffs E;
f) 0 bis 40 Gew.-%, bezogen auf die thermoplastische Formmasse, mindestens eines weiteren Zusatzstoffs F.

2. Thermoplastische Formmasse nach Anspruch 1, wobei das mindestens eine aromatische Polycarbonat A auf Biphenolen der Formel II 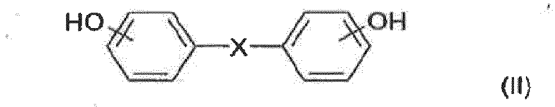 basiert, wobei X für eine Einfachbindung, C₁-C₃-Alkylen, C₂-C₃-Alkyliden, C₃-C₆-Cycloalkyliden oder auch -S- oder -SO₂- steht.

3. Thermoplastische Formmasse nach Anspruch 1 oder 2, wobei die Pfropfgrundlagen B1 des Pfropfpolymers B aufgebaut sind aus:
b11) 70 bis 99,9 Gew.-%, bezogen auf die Pfropfgrundlage B1, mindestens eines Alkylacrylats B11 mit 1 bis 8 Kohlenstoffatomen im Alkylrest,
b12) 0 bis 29,5 Gew.-%, bezogen auf die Pfropfgrundlage B1, eines weiteren copolymerisierbaren monoethylenisch ungesättigten Monomers B12 und
b13) 0,1 bis 5 Gew.-%, bezogen auf die Pfropfgrundlage B1, eines copolymerisierbaren, polyfunktionellen, vernetzenden Monomers B13,
wobei die Summe von B11, B12 und B13 100 Gew.-% ergibt.

4. Thermoplastische Formmasse nach einem der Ansprüche 1 bis 3, wobei das Copolymer C aus 70 bis 83 Gew.-%, bezogen auf das Copolymer C, Styrol und 17 bis 30 Gew.-%, bezogen auf das Copolymer C, Acrylnitril aufgebaut ist.

5. Thermoplastische Formmasse nach einem der Ansprüche 1 bis 4, wobei die thermoplastische Formmasse 2 bis 5 Gew.-% mindestens eines Antistatikums D umfasst, wobei das mindestens eine Antistatikum D aus sulfonierten Alkanen gemäß der folgenden Formel IV ausgewählt ist: 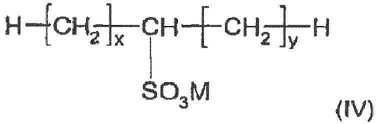
wobei x und y unabhängig voneinander für eine Zahl von 1 bis 38 stehen, mit der Maßgabe, dass x + y für eine Zahl von 5 bis 39 steht;
M aus Wasserstoff, Alkalimetallsalz oder Erdalkalimetallsalz ausgewählt ist.

6. Thermoplastische Formmasse nach einem der Ansprüche 1 bis 5, wobei die Zusammensetzung 1 bis 50 Gew.-%, bezogen auf die thermoplastische Formmasse, mindestens eines Füllstoffs E, der aus teilchenförmigen mineralischen Füllstoffen E1 und faserförmigen Füllstoffen E2 ausgewählt ist.

7. Verfahren zur Herstellung einer thermoplastischen Formmasse nach einem der Ansprüche 1 bis 6, bei dem man die Komponenten A bis D und gegebenenfalls die Komponenten E und F bei Temperaturen von 100 bis 300 °C in beliebiger Reihenfolge miteinander vermischt.

8. Verwendung von thermoplastischen Formmassen nach einem der Ansprüche 1 bis 6 zur Herstellung von Formkörpern, Fasern oder Folien.

9. Verwendung von thermoplastischen Formmassen nach Anspruch 8 zur Herstellung von Formkörpern, Fasern oder Folien für Fahrzeugbauteile oder Teile von Elektrogeräten.

10. Verwendung von thermoplastischen Formmassen nach Anspruch 8 oder 9 zur Herstellung von Formkörpern, Fasern oder Folien für Kraftfahrzeuginnenräume.

11. Formkörper, Faser oder Folie, hergestellt aus einer thermoplastischen Formmasse nach einem der Ansprüche 1 bis 6.

12. Formkörper, Faser oder Folie nach Anspruch 11, wobei es sich bei dem Formkörper, der Faser oder der Folie um einen Kraftfahrzeuginnenraum handelt.

13. Verwendung von sekundären Alkansulfonaten mit 6 bis 40 Kohlenstoffatomen als Antistatikum D in thermoplastischen Formmassen, umfassend:
a) 1 bis 97,5 Gew.-%, bezogen auf die thermoplastische Formmasse, mindestens eines aromatischen Polycarbonats A;
b) 1 bis 97,5 Gew.-%, bezogen auf die thermoplastische Formmasse, eines oder mehrerer Pfropfpolymere B aus
b1) 40 bis 80 Gew.-%, bezogen auf das Pfropfpolymer B, einer Pfropfgrundlage aus einem kautschukelastischen Polymer B1 auf der Basis von Alkylacrylaten mit 1 bis 8 Kohlenstoffatomen im Alkylrest und mit einer Glasübergangstemperatur unter 0 °C, wobei die Glasübergangstemperatur wie in der Beschreibung angegeben gemessen wird,
b2) 20 bis 60 Gew.-%, bezogen auf das Pfropfpolymer B, einer Pfropfauflage B2 aus
b21) 60 bis 95 Gew.-%, bezogen auf die Pfropfauflage B2, Styrol oder substituierten Styrolen B21 der Formel I 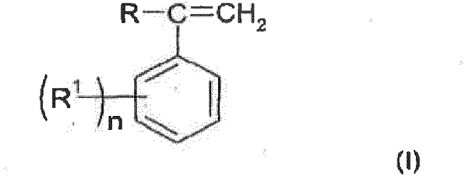
worin R für C₁-C₈-Alkyl oder Wasserstoff steht;
R¹ für C₁-C₈-Alkyl oder Wasserstoff steht, mit der Maßgabe, dass nicht R und R¹ beide für Wasserstoff stehen, und n für 1, 2 oder 3 steht,
oder einer Mischung dieser Verbindungen, und
b22) 5 bis 40 Gew.-%, bezogen auf die Pfropfauflage B2, mindestens eines ungesättigten Nitrils B22;
c) 1 bis 97,5 Gew.-%, bezogen auf die thermoplastische Formmasse, mindestens eines thermoplastischen Copolymers C aus
c1) 60 bis 85 Gew.-%, bezogen auf das thermoplastische Copolymer C, Styrol oder substituierten Styrolen C1 der Formel I oder eine Mischung dieser Verbindungen und
c2) 15 bis 40 Gew.-%, bezogen auf das thermoplastische Copolymer C, mindestens eines ungesättigten Nitrils C2.

## Revendications

1. Composition à mouler thermoplastique comprenant les composants suivants :
a) 1 à 97,5 % en poids, sur la base de la composition à mouler thermoplastique, d'au moins un polycarbonate aromatique A ;
b) 1 à 97,5 % en poids, sur la base de la composition à mouler thermoplastique, d'un ou plusieurs polymères greffés B formés à partir de
b1) 40 à 80 % en poids, sur la base du polymère greffé B, d'une base de greffage formée à partir d'un polymère élastomère B1 à base d'acrylates d'alkyle ayant de 1 à 8 atomes de carbone dans le radical alkyle et ayant une température de transition vitreuse au-dessous de 0 °C, la température de transition vitreuse étant déterminée comme indiqué dans la description,
b2) 20 à 60 % en poids, sur la base du polymère greffé B, d'un greffage B2 formé à partir de b21)
60 à 95 % en poids, sur la base du greffage B2, de styrène ou de styrènes substitués B21 représentés par la formule I 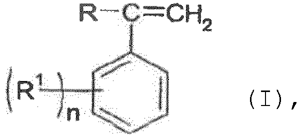 dans lesquels
R est un groupe alkyle en C₁-C₈ ou un atome d'hydrogène ;
R¹ est un groupe alkyle en C₁-C₈ ou un atome d'hydrogène, à condition que R et R¹ ne soient pas tous deux un atome d'hydrogène, et
n vaut 1, 2 ou 3,
ou d'un mélange de ces composés, et
b22) 5 à 40 % en poids, sur la base du greffage B2, d'au moins un nitrile insaturé B22 ;
c) 1 à 97,5 % en poids, sur la base de la composition à mouler thermoplastique, d'au moins un copolymère thermoplastique C formé à partir de
c1) 60 à 85 % en poids, sur la base du copolymère thermoplastique C, de styrène ou de styrènes substitués C1 représentés par la formule I, ou d'un mélange de ces composés, et
c2) 15 à 40 % en poids, sur la base du copolymère thermoplastique C, d'au moins un nitrile insaturé C2 ;
d) 0,5 à 10 % en poids, sur la base de la composition à mouler thermoplastique, d'au moins un agent antistatique D choisi parmi les alcanes sulfonés, l'au moins un agent antistatique D étant choisi parmi les alcanesulfonates secondaires, ayant de 6 à 40 atomes de carbone ;
e) 0 à 50 % en poids, sur la base de la composition à mouler thermoplastique, d'au moins une charge E ;
f) 0 à 40 % en poids, sur la base de la composition à mouler thermoplastique, d'au moins un autre additif F.

2. Composition à mouler thermoplastique selon la revendication 1, dans laquelle l'au moins un polycarbonate aromatique A est à base de bisphénols représentés par la formule II 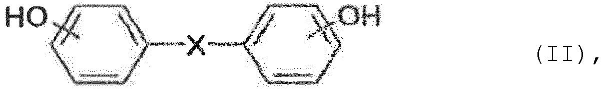 où X est une liaison simple, un groupe alkylène en C₁-C₃, alkylidène en C₂-C₃, cycloalkylidène en C₃-C₆ ou sinon -S- ou -SO₂-.

3. Composition à mouler thermoplastique selon la revendication 1 ou 2, dans laquelle la base de greffage B1 du polymère greffé B est composée de :
b11) 70 à 99,9 % en poids, sur la base de la base de greffage B1, d'au moins un acrylate d'alkyle B11 ayant de 1 à 8 atomes de carbone dans le radical alkyle,
b12) 0 à 29,5 % en poids, sur la base de la base de greffage B1, d'un autre monomère à monoinsaturation éthylénique copolymérisable B12 et
b13) 0,1 à 5 % en poids, sur la base de la base de greffage B1, d'un monomère de réticulation polyfonctionnel copolymérisable B13,
la totalité de B11, B12 et B13 donnant 100 % en poids.

4. Composition à mouler thermoplastique selon l'une quelconque des revendications 1 à 3, dans laquelle le copolymère C est composé de 70 à 83 % en poids, sur la base du copolymère C, de styrène et de 17 à 30 % en poids, sur la base du copolymère C, d'acrylonitrile.

5. Composition à mouler thermoplastique selon l'une quelconque des revendications 1 à 4, la composition à mouler thermoplastique comprenant de 2 à 5 % en poids d'au moins un agent antistatique D, l'au moins un agent antistatique D étant choisi parmi les alcanes sulfonés répondant à la formule IV suivante : 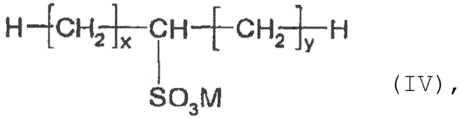 dans lesquels
x et y sont, chacun indépendamment de l'autre, un nombre de 1 à 38, à condition que x + y soit un nombre de 5 à 39 ;
M est choisi entre un atome d'hydrogène, un sel de métal alcalin et un sel de métal alcalinoterreux.

6. Composition à mouler thermoplastique selon l'une quelconque des revendications 1 à 5, la composition comprenant de 1 à 50 % en poids, sur la base de la composition à mouler thermoplastique, d'au moins une charge E choisie parmi les charges minérales particulaires E1 et les charges fibreuses E2.

7. Procédé pour la production d'une composition à mouler thermoplastique selon l'une quelconque des revendications 1 à 6, dans lequel les composants A à D et, éventuellement, les composants E et F sont mélangés les uns avec les autres dans n'importe quel ordre souhaité à des températures de 100 à 300 °C.

8. Utilisation de compositions à mouler thermoplastiques selon l'une quelconque des revendications 1 à 6 pour la production de moulages, de fibres ou de films.

9. Utilisation de compositions à mouler thermoplastiques selon la revendication 8 pour la production de moulages, de fibres ou de films pour des éléments d'automobile ou des parties de matériel électronique.

10. Utilisation de compositions à mouler thermoplastiques selon la revendication 8 ou 9 pour la production de moulages, de fibres ou de films pour des intérieurs de véhicules à moteur.

11. Moulage, fibre ou film formé à partir d'une composition à mouler thermoplastique selon l'une quelconque des revendications 1 à 6.

12. Moulage, fibre ou film selon la revendication 11, le moulage, la fibre ou le film étant un intérieur de véhicule à moteur.

13. Utilisation d'alcanesulfonates secondaires ayant de 6 à 40 atomes de carbone en tant qu'agent antistatique D dans des compositions à mouler thermoplastiques comprenant :
a) 1 à 97,5 % en poids, sur la base de la composition à mouler thermoplastique, d'au moins un polycarbonate aromatique A ;
b) 1 à 97,5 % en poids, sur la base de la composition à mouler thermoplastique, d'un ou plusieurs polymères greffés B formés à partir de
b1) 40 à 80 % en poids, sur la base du polymère greffé B, d'une base de greffage formée à partir d'un polymère élastomère B1 à base d'acrylates d'alkyle ayant de 1 à 8 atomes de carbone dans le radical alkyle, sur de l'éthylène-propylène, sur des diènes ou sur des siloxanes, et ayant une température de transition vitreuse au-dessous de 0 °C, la température de transition vitreuse étant déterminée comme indiqué dans la description,
b2) 20 à 60 % en poids, sur la base du polymère greffé B, d'un greffage B2 formé à partir de
b21) 60 à 95 % en poids, sur la base du greffage B2, de styrène ou de styrènes substitués B21 représentés par la formule I 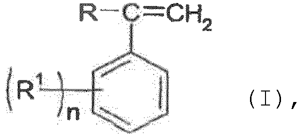 dans lesquels
R est un groupe alkyle en C₁-C₈ ou un atome d'hydrogène ;
R¹ est un groupe alkyle en C₁-C₈ ou un atome d'hydrogène, à condition que R et R¹ ne soient pas tous deux un atome d'hydrogène, et
n vaut 1, 2 ou 3,
ou d'un mélange de ces composés, et
b22) 5 à 40 % en poids, sur la base du greffage B2, d'au moins un nitrile insaturé B22 et
c) 1 à 97,5 % en poids, sur la base de la composition à mouler thermoplastique, d'au moins un copolymère thermoplastique C formé à partir de :
c1) 60 à 85 % en poids, sur la base du copolymère thermoplastique C, de styrène ou de styrènes substitués C1 représentés par la formule I, ou d'un mélange de ces composés, et
c2) 15 à 40 % en poids, sur la base du copolymère thermoplastique C, d'au moins un nitrile insaturé C2.
